# EUROPÄISCHE PATENTSCHRIFT

(11) **EP 0 361 094 B1**
(45) Veröffentlichungstag und Bekanntmachung des Hinweises auf die Patenterteilung: **04.05.1994**
(21) Anmeldenummer: 89115735.6
(22) Anmeldetag: 25.08.1989
(51) Int. Cl.: B60D 1/00, B60D 1/52

(54) **Zusatzvorrichtung für ein Zugfahrzeug, insbesondere einen Geländewagen**
Auxiliary device for a tractor, particularly a terrain vehicle
Dispositif auxiliaire pour un tracteur, en particulier un véhicule tout terrain

(30) Priorität: 07.09.1988 DE 3830424
(43) Veröffentlichungstag der Anmeldung: 04.04.1990
(73) Patentinhaber: Rumpp, Gerhard, D-82266 Inning (DE)
(72) Erfinder: Rumpp, Gerhard, D-82266 Inning (DE)
(74) Vertreter: Grünecker, Kinkeldey, Stockmair & Schwanhäusser Anwaltssozietät

(56) Entgegenhaltungen:
- DE-A- 2 900 866
- DE-B- 1 555 199
- DE-U- 8 534 875
- US-A- 4 620 736

## Beschreibung

Die Erfindung bezieht sich auf eine Zusatzvorrichtung für ein Zugfahrzeug, insbesondere einen Geländewagen, der im Oberbegriff des Patentanspruchs 1 genannten Art.

Eine solche, aus der US-A-46 20 736 bekannte Zusatzvorrichtung weist eine Grundplatte auf, die an einer Stoßstange des Fahrzeugs befestigt ist. Diese Grundplatte weist eine schräg nach unten verlaufende Nut auf, in die über eine Adapterplatte ein Kupplungskopf bzw. eine Winde einsteckbar ist. Zum Sichern gegen eine Bewegung nach oben ist ein Stift vorgesehen.

Aus der DE-OS 35 12 981 ist eine Zusatzvorrichtung bekannt, der einen im Rückbereich eines Zugfahrzeuges fest angebrachten Kupplungsrahmen umfaßt, der mit Hinterschneidungen versehen ist. Die mit diesem Kupplungswechselrahmen lösbar zu verbindenden unterschiedlichen Teile sind unterschiedlich ausgebildete Kupplungen, wie z.B. ein Kugelkopf oder eine Öse, wobei diese unterschiedlichen Kupplungen mit Profilteilen versehen sind, die in die Hinterschneidungen des Kupplungswechselrahmens formschlüssig eingreifen. Die Kupplungen werden außerdem über Bolzen und Muttern mit dem Kupplungswechselrahmen verbunden.

Aufgabe der Erfindung ist es, eine Zusatzvorrichtung der genannten Art so auszubilden, daß ein freizügiges und leichtes Anbringen bzw. Beladen unterschiedlichster Vorsatz- und Arbeitsgeräte an bzw. auf der Zusatzvorrichtung ermöglicht wird.

Bei einer Zusatzvorrichtung der genannten Art ist diese Aufgabe erfindungsgemäß durch die im kennzeichnenden Teil des Patentanspruchs 1 angegebenen Merkmale gelöst.

Die versteifte Grundplatte ist sowohl im Frontbereich als auch im Rückbereich eines Zugfahrzeuges, insbesondere eines üblichen Geländewagens in einfacher Weise anbringbar, ohne daß besondere Veränderungen an dem Fahrzeug selbst vorgenommen werden müssen. Die Grundplatte wird dabei mit Hilfe von zwei Befestigungseinrichtungen an dem Fahrzeugrahmen festgelegt und weist mindestens einen von ihrer dem Fahrzeug abgewandten Kante aus zugänglichen Befestigungspunkt auf, an dem die unterschiedlichen Teile anbringbar sind. Diese unterschiedlichen Teile können dabei unterschiedliche Kupplungen, wie ein Kugelkopf, eine Öse, ein Haken, sowie ein Rollenfenster für eine Seilzugwinde oder aber andere Vorsatz- und Arbeitsgeräte beliebiger Art sein, um z.B. einen Schneepflug mit dem Fahrzeug zu verbinden. Auf vorteilhafte Weise sind die Befestigungseinrichtungen als Schwenkeinrichtungen ausgebildet, so daß ein Beladen bzw. Entladen von auf der Oberseite der Grundplatte aufzubauenden Teilen, wie z.B. einer Gerätekiste oder Seilzugwinde erleichtert wird. Sowohl in der Betriebsstellung als auch in der Schwenkstellung sind Abstützeinrichtungen zur Sicherung der Grundplatte in der jeweiligen Schwenklage vorgesehen.

Weiterbildungen der Erfindung sind in den Unteransprüchen angegeben.

Ein Ausführungsbeispiel der Erfindung wird anhand der Zeichnung erläutert. Im einzelnen zeigt:
- Fig. 1: die Grundplatte zusammen mit einer an ihr befestigten Stütze im Schnitt,
- Fig. 2: eine Teilansicht der Grundplatte mit ihrer Befestigungseinrichtung am Fahrzeug,
- Fig. 3: eine andere Teilansicht der in Fig. 2 gezeigten Befestigungseinrichtung,
- Fig. 4: die an der Grundplatte befestigte Stütze aus einer anderen Ansicht und
- Fig. 5: eine Zusammenstellung unterschiedlichster mit der Grundplatte zu verbindender Teile nach Art einer Explosionsdarstellung.

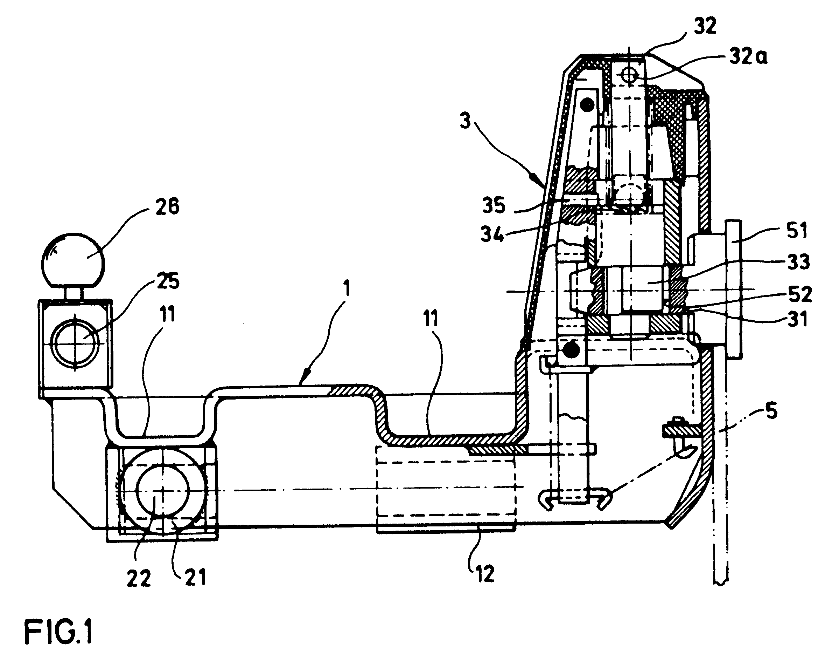

In Fig. 1 ist eine Grundplatte 1 teilweise im Schnitt und in ihrer horizontalen Gebrauchsstellung dargestellt. Die Grundplatte 1 ist mit Hilfe von quer zur Fahrzeuglängsachse verlaufende U-förmige Ausformungen 11 versteift. Unterhalb der in Fig. 1 linksseitigen und bei der Anbringung der Grundplatte an einem Fahrzeug fahrzeugseitigen Ausformung 11 sind an der Grundplatte 1 links und rechts Lagerbuchsen 21 angeschweißt, von denen in Fig. 1 nur eine zu erkennen ist.

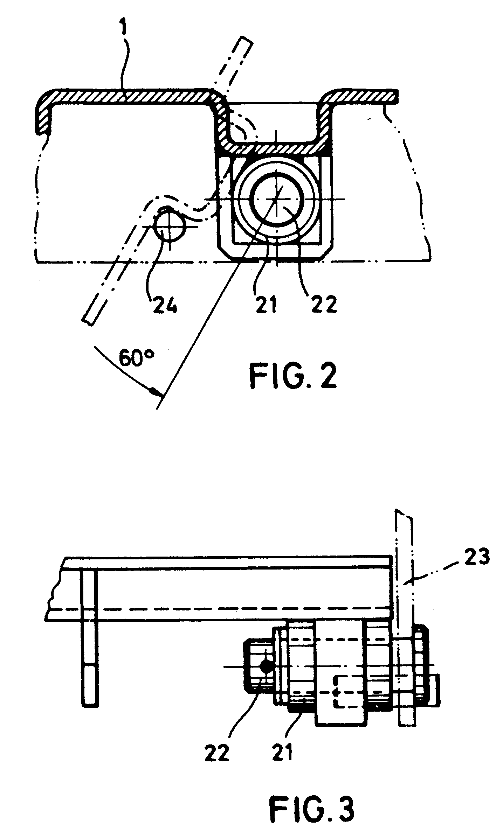

Wie dieses den Fig. 2 und 3 zu entnehmen ist, sind in den Lagerbuchsen 21 jeweils erste Bolzen 22 gelagert, die links und rechts jeweils in Bohrungen von Fahrzeugrahmen-Längsträgern 23 eingreifen, wodurch die Grundplatte 1 am Fahrzeugrahmen schwenkbar festgelegt wird. Wie aus Fig. 2 zu erkennen ist, kann die Grundplatte 1 um vorzugsweise bis zu 60° gegenüber der Horizontalen geschwenkt werden, bevor sie an einem am Fahrzeugrahmen z.B. angeschweißten Anschlag 24 anschlägt. Das Schwenken der Grundplatte erleichtert ihr Beladen mit auf ihrer Oberseite aufzubauenden Teilen, wie z.B. einer später noch erläuterten Gerätekiste oder Seilzugwinde.

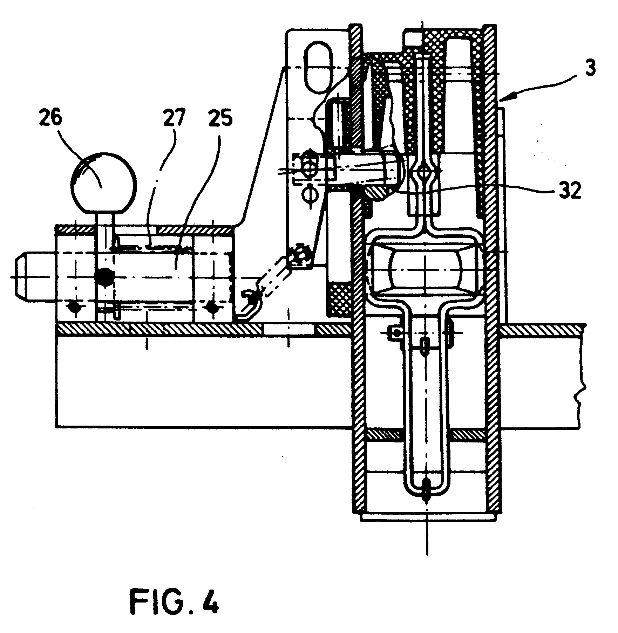

Wie aus den Fig. 1 und 4 zu erkennen ist, sind im Bereich der vom Fahrzeug abgewandten Kante, in Fig. 1 rechts, sich im wesentlichen vertikal erstreckende Stützen 3 auf der Grundplatte 1 fest angeordnet. Außerdem sind in diesem Bereich links und rechts auf der Grundplatte 1 federbeaufschlagte, axial verschiebliche zweite Bolzen 25 gelagert, die in im Fahrzeugrahmen vorgesehene Bohrungen bzw. Buchsen eingreifen, um die Grundplatte 1 in ihrer im wesentlichen horizontalen Gebrauchsstellung zu arretieren. Diese zweite Bolzen 25 können mit Hilfe einer Handhabung 26 gegen die Kraft einer Druckfeder 27 außer Eingriff vom Fahrzeugrahmen gebracht werden, um dann die Grundplatte 1 in der bereits beschriebenen Weise um die Bolzen 21 nach unten schwenken zu können. Wie dieses in Fig. 1 gezeigt ist, können derartige Bolzen auch an der fahrzeugseitigen Kante der Grundplatte 1 vorgesehen sein.

In den Stützen 3, von denen in den Fig. 1 und 4 jeweils nur eine gezeigt ist, ist ein von der dem Fahrzeug abgewandten Seite aus zugängliches Maul 31 vorgesehen, in das ein dritter Bolzen 51 einzuführen ist. Ein innerhalb der Stütze 3 in vertikaler Richtung verschiebbarer vierter Bolzen 32 greift in eine in dem dritten Bolzen 51 vorgesehene Öffnung 52 ein. Der vierte Bolzen 32 ist mit einem Exzenter 33 versehen. An seiner Mantelfläche weist der vierte Bolzen 32 außerdem Zähne 34 auf, die mit einem Sperrstift 35 zur Bildung einer Rasteinrichtung zusammenwirken. Bei wirksamer Rasteinrichtung kann der vierte Bolzen 32 daher nur gegen den Uhrzeigersinn gedreht werden, wozu ein hier nicht gezeigter Steckschlüssel in eine oben am vierten Bolzen 32 vorgesehene Öffnung 36 eingesteckt wird. Durch diese Drehung des vierten Bolzens 32 gegen den Uhrzeigersinn wird mit Hilfe des Exzenters 33 der dritte Bolzen 51 in die Stütze 3 hineingezogen.

Aufbau und Wirkungsweise dieser jeweils einen Befestigungspunkt bzw. eine Befestigungsvorrichtung bildenden Stütze sind in der DE-A-38 30 426 beschrieben.

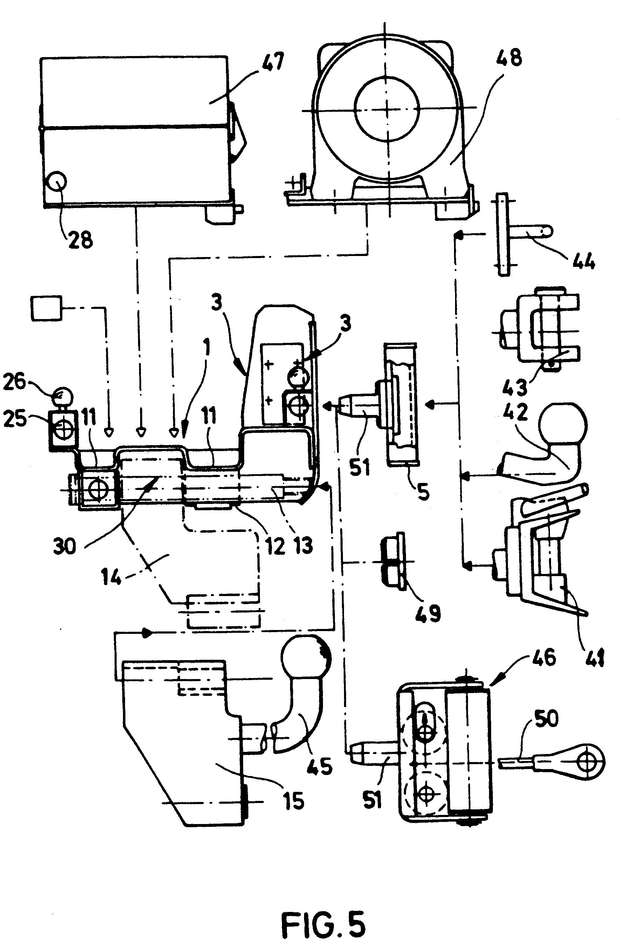

Mit dem dritten Bolzen bzw. mit beiden dritten Bolzen 51, die mit den zwei auf der Grundplatte 1 befestigten Stützen 3 jeweils zusammenwirken, sind die mit dem Fahrzeug bzw. der Grundplatte 1 lösbar zu verbindenden unterschiedlichen Teile verbunden. Vorzugsweise sind die Bolzen 51 mit einer Adapterplatte 5 verbunden, wie dieses in Fig. 5 schematisch dargestellt ist. Mit dieser Adapterplatte 5 können wiederum verschiedene Vorsatzelemente lösbar, d.h. z.B. durch Verschrauben, der unlösbar, z.B. durch verschweißen, verbunden werden. Wie dieses in Fig. 5 schematisch dargestellt ist, können diese Vorsatzelemente ein Zugmaul 41, ein Kugelkopf 42, eine Gabel-Bolzen-Anordnung 43 und eine Öse 44 sein.

Werden die in den Stützen 3 der Grundplatte 1 vorgesehenen Befestigungspunkte nicht benutzt, so werden in die jweiligen Mäuler 31 der Stützen 3 Blindstopfen 49 eingesetzt, um die in den Stützen 3 vorgesehene Befestigungsvorrichtung vor Verschmutzung und Beschädigung zu schützen.

Anstelle der Adapterplatte 5 kann als ein weiteres Vorsatzgerät ein Rollenfenster 46 mit Hilfe der dritten Bolzen 51 mit den Stützen 3 und damit mit der Grundplatte 1 verbunden werden. Derartige Rollenfenster dienen zum Führen eines von einer Seilzugwinde aufzuwickelnden Seils 50, wie dieses in Fig. 5 schematisch dargestellt ist. Eine mit diesem Rollenfenster 46 zusammenwirkende Seilzugwinde 48 kann in der in Fig. 5 gezeigten Weise auf der Oberseite der Grundplatte 1 aufgebaut werden, wobei diese Seilzugwinde 48 in eine oder aber beide Ausformungen 11 der Grundplatte 1 formschlüssig eingreift, um an der Grundplatte 1 festgelegt zu werden oder aber quer zur Fahrzeuglängsachse verschiebbar geführt zu werden, um ein gleichmäßiges Aufwickeln des Seils 50 auf der Windentrommel zu gewährleisten.

Anstelle der Seilzugwinde 48 können auf der Grundplatte 1 auch beliebige andere Geräte aufgebaut werden, wie z.B. eine in Fig. 5 gezeigte Gerätekiste 47, in der z.B. die in Fig. 5 ebenfalls gezeigten Vorsatzelemente 41 bis 44 untergebracht werden können. An der Gerätekiste 47 kann eine Ausnehmung 28 vorgesehen sein, in die der federbelastete zweite Bolzen 25 zum Festlegen der Gerätekiste 47 auf der Grundplatte 1 eingreifen kann. Eine ähnliche Aufnahme für den zweiten Bolzen 25 kann auch an der Seilzugwinde 48 vorgesehen sein.

Wie dieses in den Fig. 1 und 5 gezeigt ist, ist unterhalb der Grundplatte 1 im Bereich der rechtsseitigen Ausformung 11 eine Befestigungshülse 12 angeschweißt, die mit der Fahrzeuglängsachse im wesentlichen fluchtet. Die Befestigungshülse 12 nimmt einen fünften Bolzen 13 auf, der einen weiteren Befestigungspunkt 30 für mit dem Fahrzeug lösbar zu verbindenden Teile bildet. Der fünfte Bolzen 13 trägt einen in Fig. 5 nur schematisch angedeuteten Stützträger 14, der formschlüssig mit einem Profilteil 15 zusammenwirkt, das ebenfalls von dem fünften Bolzen 13 gehaltert wird. An dem Profilteil ist z.B. eine Kugelkupplung 45 befestigt, die damit das weitere mit dem Fahrzeug lösbar zu verbindende Teil bildet. Wie in Fig. 5 ebenfalls angedeutet ist, können der Stützträger 14 und das Profilteil 15 in ihrem unteren Bereich über einen weiteren Bolzen miteinander verbunden werden. Aufbau und Wirkungsweise einer diesen weiteren Befestigungspunkt bildenden Befestigungsvorrichtung sind in der DE-A-38 30 425 ... im einzelnen beschrieben.

Wie dieses aus der Zeichnung und der vorstehenden Beschreibung ohne weiteres klar wird, kann die Grundplatte 1 jeweils im Frontbereich oder aber im Rückbereich eines Geländewagens in einfacher Weise angebracht werden.

Selbstverständlich können auch zwei Grundplatten sowohl im Frontbereich als auch im Rückbereich gleichzeitig angebracht werden.

## Patentansprüche

1. Zusatzvorrichtung für ein Zugfahrzeug, insbesondere einen Geländewagen, die in dessen Front- und/oder Rückbereich angebracht ist und zur lösbaren Verbindung von unterschiedlichen, Zug- und/oder Druckkräfte auf das Zugfahrzeug ausübenden Teilen (41, 42, 43, 44, 45, 46) mit dem Zugfahrzeug dient, mit einer versteiften, in ihrer Gebrauchsstellung im wesentlichen horizontal ausgerichteten Grundplatte (1), die im Bereich ihrer fahrzeugseitigen Kante über mindestens zwei Befestigungseinrichtungen (2) mit dem Fahrzeugrahmen verbunden ist und mindestens einen, von ihrer dem Fahrzeug abgewandten Kante aus zugänglichen Befestigungspunkt (3, 30) aufweist, an dem die Teile (41, 42, 43, 44, 45, 46) anbringbar sind, **dadurch gekennzeichnet**, daß die Befestigungseinrichtungen(2) als Schwenkeinrichtungen (21, 22) ausgebildet sind, und daß eine Abstützeinrichtung (25; 24) zur Sicherung der Grundplatte (1) in einer vorbestimmten Schwenklage vorgesehen ist.

2. Zusatzvorrichtung nach Anspruch 1, **dadurch gekennzeichnet**, daß die Grundplatte (1) durch quer zur Fahrzeuglängsachse verlaufende, U-förmige Ausformungen (11) versteift ist, die als formschlüssige Führungs- und/oder Halterungsprofile benutzbar sind.

3. Zusatzvorrichtung nach Anspruch 1 oder 2, **dadurch gekennzeichnet**, daß die Schwenkeinrichtung (21, 22) an der Grundplatte (1) links und rechts angebrachte Lagerbuchsen (21) und in diesen gelagerte erste Bolzen (22) umfaßt, die in in Fahrzeugrahmen-Längsträgern (23) vorgesehene Bohrungen eingreifen.

4. Zusatzvorrichtung nach Anspruch 3**, dadurch gekennzeichnet**, daß die Abstützeinrichtung (25) auf der Grundplatte (1) im Bereich ihrer vom Fahrzeug abgewandten Kante links und rechts angefederte, axial verschiebliche zweite Bolzen (25) umfaßt, die in im Fahrzeugrahmen vorgesehene Bohrungen bzw. Buchsen eingreifen, um die Grundplatte (1) in ihrer Gebrauchsstellung zu arretieren.

5. Zusatzvorrichtung nach Anspruch 4, **dadurch gekennzeichnet**, daß die Abstützeinrichtung (25) weiterhin einen fahrzeugfesten Anschlag (24) umfaßt, die nach unten gerichtete Schwenkbewegung der Grundplatte (1) auf etwa 60° begrenzt.

6. Zusatzvorrichtung nach einem der Ansprüche 1 bis 5, **dadurch gekennzeichnet**, daß die Grundplatte (1) zwei in Querrichtung zur Längsachse des Fahrzeuges voneinander beabstandete Befestigungspunkte (3) aufweist, an denen eine sich an der vom Fahrzeug abgewandten Kante abstützende Adapterplatte (5) zu befestigen ist, an der wiederum die Teile (41, 42, 43, 44) bildende Arbeits- und Vorsatzgeräte anzubringen sind.

7. Zusatzvorrichtung nach Anspruch 6, **dadurch gekennzeichnet**, daß die zwei Befestigungspunkte (3) durch jeweils eine sich im wesentlichen vertikal erstreckende Stütze gebildet sind, die jeweils mit der Grundplatte (1) fest verbunden ist, ein von der vom Fahrzeug abgewandten Seite zugängliches Maul (31) hat, in das jeweils ein mit der Adapterplatte (5) verbundener dritter Bolzen (51) einführbar ist, und einen in vertikaler Richtung verschiebbaren vierten Bolzen (32) aufweist, der sich durch eine im dritten Bolzen (51) vorgesehene Öffnung (52) hindurch erstreckt.

8. Zusatzvorrichtung nach Anspruch 7, **dadurch gekennzeichnet**, daß der vierte Bolzen (32) mit einem Exzenter (33) versehen ist, wodurch bei einer Drehung des vierten Bolzens (32) der dritte Bolzen (51) in die Stütze (3) hinein und damit die Adapterplatte (5) in Richtung der Fahrzeuglängsachse an die Grundplatte (1) heran vorspannbar sind.

9. Zusatzvorrichtung nach einem der Ansprüche 1 bis 8, **dadurch gekennzeichnet**, daß auf der Oberseite der Grundplatte (1) weitere Teile (47, 48), wie z.B. eine Gerätekiste (47) oder eine Seilzugwinde (48), aufbaubar sind.

10. Zusatzvorrichtung nach einem der Ansprüche 1 bis 9, **dadurch gekennzeichnet**, daß an der Unterseite der Grundplatte (1) mit der Fahrzeuglängsachse im wesentlichen fluchtend eine Befestigungshülse (12) angebracht ist, die einen fünften Bolzen (13) aufnimmt, der einen weiteren Befestigungspunkt (30) für die Teile (45) bildet.

11. Zusatzvorrichtung nach einem der Ansprüche 1 bis 10, **dadurch gekennzeichnet**, daß die Teile (41 ... 45) eine Öse (44), eine Gabel-Bolzen-Anordnung (43), einen Kugelkopf (42, 45), ein Zugmaul (41) und ein Rollenfenster (46) umfassen.

## Claims

1. Attachment for a tractor vehicle, in particular an off-the-road vehicle, which is fitted to the front and/or rear of the vehicle for releasable attachment to the vehicle of various parts (41, 42, 43, 44, 45, 46) exerting pulling and/or pushing forces on the vehicle, with a reinforced base plate (1) which is aligned essentially horizontally in its working position, is connected to the vehicle chassis, at the end of the base plate nearer the vehicle, by at least two mounting devices (2), and possesses at least one mounting point (3, 30), to which the parts (41, 42, 43, 44, 45, 46) can be attached, accessible from the end of the base plate further away from the vehicle, characterized in that the mounting devices (2) are in the form of pivoting devices (21, 22), and in that a stay (25; 24) is provided for securing the base plate (1) in a predetermined pivoting position.

2. Attachment according to Claim 1, characterized in that the base plate (1) is reinforced with channel-shaped dimples (11), which can be used as form-fitting guiding and/or mounting profiles, extending at right angles to the longitudinal axis of the vehicle.

3. Attachment according to Claim 1 or 2, characterized in that the pivoting device (21, 22) comprises bearing bushes (21) fitted to the base plate (1) on either side and first pins (22) mounted in the said bearing bushes to engage in bores provided in side bars (23) of the vehicle chassis.

4. Attachment according to Claim 3, characterized in that the stay device (25) comprises spring-loaded axially displaceable second pins (25) mounted on the base plate (1) on either side at the end further away from the vehicle, to engage in bores or bushes provided in the vehicle chassis to lock the base plate (1) in its working position.

5. Attachment according to Claim 4, characterized in that the stay device (25) also comprises a stop (24), fixed to the vehicle, which limits the downward pivoting movement of the base plate (1) to about 60°.

6. Attachment according to one of Claims 1 to 5, characterized in that the base plate (1) has two mounting points (3) which are spaced apart from one another in the direction at right angles to the longitudinal axis of the vehicle and mountable on which, on the side further away from the vehicle, is an adapter plate (5) to which, in turn, the parts (41, 42, 43, 44) constituting implements and attachments can be attached.

7. Attachment according to Claim 6, characterized in that the two mounting points (3) are each constituted by an essentially vertical pillar which is permanently connected to the base plate (1), has a mouth (31), accessible from the side further away from the vehicle, into which a third pin (51) connected to the adapter plate (5) can be inserted, and has a vertically displaceable fourth pin (32) extending through a bore (52) provided in the third pin (51).

8. Attachment according to Claim 7, characterized in that the fourth pin (32) is provided with an eccentric cam (33) whereby upon rotation of the fourth pin (32) the third pin (51) can be drawn into the pillar (3) thus clamping the adapter plate (5) to the base plate (1) in the direction of the longitudinal axis of the vehicle.

9. Attachment according to one of Claims 1 to 8, characterized in that further parts (47, 48), such as a tool-chest (47) or winch (48), can be mounted on the top of the base plate (1).

10. Attachment according to one of Claims 1 to 9, characterized in that a mounting sleeve (12), which is essentially in alignment with the longitudinal axis of the vehicle, is fitted to the underside of the base plate (1) to receive a fifth pin (13) which forms an additional mounting point (30) for the parts (45).

11. Attachment according to one of Claims 1 to 10, characterized in that the parts (41 to 45) comprise an eye (44), a yoke-and-pin arrangement (43), a ball (42, 45), a tow jaw (41) and a fairlead (46).

## Revendications

1. Dispositif auxiliaire pour un véhicule tracteur, en particulier pour un véhicule tout-terrain, qui est monté à l'avant et/ou à l'arrière dudit véhicule et sert à relier de manière amovible au véhicule tracteur différentes pièces (41, 42, 43, 44, 45, 46) exerçant des forces de traction et/ou de pression sur le véhicule tracteur, comprenant une plaque de base (1) renforcée qui dans sa position d'utilisation est orientée sensiblement horizontalement, est reliée au châssis du véhicule dans la région de son bord côté véhicule par l'intermédiaire d'au moins deux dispositifs de fixation (2) et présente au moins un point de fixation (3, 30) qui est accessible à partir de son bord éloigné du véhicule et sur lequel peuvent être montées les pièces (41, 42, 43, 44, 45, 46), **caractérisé** en ce que les dispositifs de fixation (2) sont réalisés sous forme de dispositifs pivotants (21, 22) et qu'un dispositif d'appui (25 ; 24) est prévu pour bloquer la plaque de base (1) dans une position de pivotement prédéterminée.

2. Dispositif auxiliaire selon la revendication 1, **caractérisé** en ce que la plaque de base (1) est renforcée par des creux (11) en forme de U qui s'étendent transversalement à l'axe longitudinal du véhicule et peuvent être utilisés en tant que profilés de guidage et/ou de fixation agissant par complémentarité de formes.

3. Dispositif auxiliaire selon la revendication 1 ou 2, **caractérisé** en ce que le dispositif de pivotement (21, 22) comprend des coussinets (21) disposés à gauche et à droite sur la plaque de base (1) et des premiers boulons (22) qui sont montés dans ces coussinets et s'engagent dans des perçages prévus dans des longerons (23) du châssis du véhicule.

4. Dispositif auxiliaire selon la revendication 3, **caractérisé** en ce que le dispositif d'appui (25) comprend des deuxièmes boulons (25) mobiles axialement et sollicités par ressort qui sont montés sur la plaque de base (1) à gauche et à droite dans la zone de son bord éloigné du véhicule et s'engagent dans des perçages ou des coussinets prévus dans le châssis du véhicule afin de bloquer la plaque de base (1) dans sa position d'utilisation.

5. Dispositif auxiliaire selon la revendication 4, **caractérisé** en ce que le dispositif d'appui (25) comprend en outre une butée (24) solidaire du véhicule qui limite à environ 60° un pivotement vers le bas de la plaque de base (1).

6. Dispositif auxiliaire selon l'une des revendications 1 à 5, **caractérisé** en ce que la plaque de base (1) présente deux points de fixation (3) qui sont écartés l'un de l'autre transversalement à l'axe longitudinal du véhicule et sur lesquels doit être fixée une plaque d'adaptation (5) qui prend appui contre le bord éloigné du véhicule et sur laquelle sont montés les appareils adaptables et les outils formant les pièces (41, 42, 43, 44).

7. Dispositif auxiliaire selon la revendication 6, **caractérisé** en ce que les deux points de fixation (3) sont chacun formés par une colonne qui s étend sensiblement verticalement, est reliée de manière fixe à la plaque de base (1), possède une bouche (31) qui est accessible du côté éloigné du véhicule, dans laquelle peut être introduit un troisième boulon (51) relié à la plaque d'adaptation (5) et présente un quatrième boulon (32) mobile verticalement qui traverse une ouverture (52) prévue dans le troisième boulon (51).

8. Dispositif auxiliaire selon la revendication 7, **caractérisé** en ce que le quatrième boulon (32) est muni d'un excentrique (33), ce qui fait qu'en cas de rotation du quatrième boulon (32), le troisième boulon (51) rentre dans la colonne (3) et que la plaque d'adaptation (5) est ainsi tendue contre la plaque de base (1) en direction de l'axe longitudinal du véhicule.

9. Dispositif auxiliaire selon l'une des revendications 1 à 8, **caractérisé** en ce que d'autres pièces (47, 48) comme par exemple une caisse à outils (47) ou un treuil à câble (48) peuvent être montées sur le côté supérieur de la plaque de base (1).

10. Dispositif auxiliaire selon l'une des revendications 1 à 9, **caractérisé** en ce qu'une douille de fixation (12) sensiblement alignée avec l'axe longitudinal du véhicule est montée sur le côté inférieur de la plaque de base (1), laquelle douille reçoit un cinquième boulon (13) qui constitue un autre point de fixation (30) pour les pièces (45).

11. Dispositif auxiliaire selon l'une des revendications 1 à 10, **caractérisé** en ce que les pièces (41 ... 45) comprennent un oeillet (44), un dispositif à fourche et boulon (43), une boule (42,45), une mâchoire de traction (41) et un guide par galets (46).
